# DEMANDE DE BREVET EUROPEEN

(11) **EP 1 553 417 A1**
(43) Date de publication de la demande: **13.07.2005**
(21) Numéro de dépôt: 05356005.8
(22) Date de dépôt: 07.01.2005
(51) Int. Cl.: G01P 1/02

(54) **Capteur de vitesse à tenue elevée en vibrations**

(30) Priorité: 09.01.2004 FR 0400161
(71) Demandeur: Electricfil Automotive, 01708 Miribel Cedex (FR)
(72) Inventeur: Roussel, Laurent, 69800 Saint-Priest (FR); Paschini, Luigi, 69300 Caluire (FR); Besson, Christophe, 73230 Saint-Alban Leysse (FR)
(74) Mandataire: Thibault, Jean-Marc

(57) **Abrégé**

L'invention concerne un capteur de vitesse comportant dans un godet de protection (**2**), une plaquette (**3**) de circuit imprimé allongée présentant première extrémité (**4**) et une deuxième extrémité (**9**) supportant au moins une cellule (**11**) s'étendant à proximité du fond du godet caractérisé en ce que la plaquette de circuit imprimé (**3**) est maintenue en position à l'intérieur du godet (**2**) à l'aide de moyens assurant son appui contre le godet à au moins ses première et deuxième extrémités afin de limiter les amplitudes de vibration de la plaquette.

## Description

L'objet de la présente invention concerne le domaine technique des capteurs de vitesse destinés à fonctionner dans des conditions difficiles de températures et/ou de vibrations.

L'objet de l'invention trouve une application particulièrement avantageuse dans le domaine de l'automobile, et notamment des véhicules poids lourds auxquels est attachée une fonction de mesure de vitesse associée à une mesure de la durée du temps de conduite.

Dans l'état technique, il est connu dans le cadre de la fonction tachychronographe, d'utiliser un capteur de vitesse comportant au moins une cellule sensible s'étendant à proximité d'une cible mobile.

Dans certaines applications, il apparaît le besoin de disposer la cellule sensible au fond d'un puits de manière qu'elle se trouve positionnée à proximité de la cible mobile. Compte tenu d'une telle configuration, le capteur de vitesse présente une forme allongée et comporte généralement un godet de protection dans lequel est montée une plaquette de circuit imprimé de forme allongée équipée de divers composants électroniques. Cette plaquette présente une première extrémité munie d'un embout de montage dans le godet et une deuxième extrémité supportant une ou plusieurs cellules sensibles venant se positionner à proximité du fond du godet. Généralement, le godet est rempli d'une résine permettant de maintenir en position la plaquette de circuit imprimé à l'intérieur du godet.

Toutefois, lorsque le capteur est soumis à des vibrations mécaniques et/ou à des écarts importants de températures, en particulier, lorsqu'il se trouve embarqué à bord d'un véhicule, il apparaît des dilatations différentielles entre la plaquette et les composants conduisant à des contraintes entraînant une délamination des composants et par suite, le non-fonctionnement du capteur.

Dans l'état de la technique, il est connu par le brevet FR 2 692 351, un capteur de déplacement comportant dans un boîtier, un câble coaxial relié par un circuit imprimé souple, à un transducteur monté en contact avec le boîtier à l'aide d'un coussinet. Un tel capteur ne propose pas une solution efficace de montage d'une plaquette de circuit imprimé adaptée pour éviter une détérioration des composants montés sur la plaquette de circuit imprimé.

La demande de brevet US 2003/002241 décrit un capteur comportant un boîtier à l'intérieur duquel est aménagé un évidement dans lequel prend place les composants montés sur la plaquette de circuit imprimé dont une extrémité est fixée de manière à obtenir une plaquette en porte-à-faux. Dans la mesure où les composants de cette plaquette sont placés dans l'évidement, cette région de la plaquette peut se dilater à la suite des variations de température sans que de tels composants se trouvent en contact avec le boîtier. Cependant, un tel capteur n'est pas adapté pour maintenir en position, une cellule sensible à proximité du fond du boîtier.

L'objet de l'invention vise donc à remédier aux inconvénients énoncés de l'état de la technique en proposant un capteur de vitesse conçu pour présenter une durée de vie relativement longue même lorsqu'il est soumis à des vibrations et /ou des écarts importants de température.

Pour atteindre un tel objectif, l'objet de l'invention concerne un capteur de vitesse comportant dans un godet de protection, une plaquette de circuit imprimé allongée présentant une première extrémité et une deuxième extrémité supportant au moins une cellule s'étendant à proximité du fond du godet, la plaquette de circuit imprimé étant maintenue en position à l'intérieur du godet à l'aide de moyens assurant son appui contre le godet à au moins ses première et deuxième extrémités afin de limiter les amplitudes de vibration de la plaquette.

Selon une autre variante de réalisation, le capteur de vitesse comporte au moins une pièce d'appui dite intermédiaire montée entre les extrémités de la plaquette.

Selon une caractéristique préférée de réalisation, les moyens d'appui de la deuxième extrémité sont constitués par au moins une pièce d'appui d'extrémité délimitant au moins un logement pour une cellule.

De préférence, la pièce d'appui d'extrémité est en appui sur le godet à l'aide d'un godet intermédiaire.

Avantageusement, la pièce d'extrémité est noyée dans une résine l'immobilisant dans le godet.

De préférence, chaque pièce d'appui est pourvue de moyens élastiques d'appui sur le godet.

De préférence encore, chaque pièce d'appui est pourvue de moyens de montage sur la plaquette.

Avantageusement, chaque pièce d'appui intermédiaire est réalisée par l'intermédiaire d'un manchon ouvert comportant d'une part deux pattes axiales délimitant entre elles un alésage de passage pour la plaquette, et d'autre part, deux ailes élastiques diamétralement opposées en appui sur le godet.

Par exemple, la pièce d'appui intermédiaire comporte un corps délimitant d'un côté, une cavité de réception de l'extrémité libre de la plaquette et de l'autre côté, le logement de réception d'au moins une cellule sensible autour duquel s'étendent axialement des doigts élastiques répartis à la circonférence du corps.

Selon une autre variante de réalisation, la plaquette de circuit imprimé présente une partie élargie s'étendant à partir de l'embout d'assemblage et se prolongeant par une partie étroite jusqu'à la deuxième extrémité.

Selon cette dernière variante de réalisation, une pièce d'appui est montée sur la partie étroite de la plaquette à une distance de la zone de jonction avec la partie élargie, de l'ordre sensiblement de 9 mm ; 18,5 mm ; 33,5 mm ; 9 et 83 mm pour une longueur totale de la plaquette respectivement égale à 101 mm ; 128 mm ; 145 mm et 175 mm.

Diverses autres caractéristiques ressortent de la description faite ci-dessous en référence aux dessins annexés qui montrent, à titre d'exemples non limitatifs, des formes de réalisation de l'objet de l'invention.

La **figure 1** est une vue générale montrant un premier exemple de réalisation d'un capteur conforme à l'invention en position démontée.

Les **figures 2** et **3** sont des vues de détails en perspective, avant et arrière d'une pièce d'appui faisant partie du capteur selon l'invention.

La **figure 4** illustre une autre variante de réalisation d'une pièce d'appui conforme à l'invention.

La **figure 5** illustre une autre variante de réalisation d'une pièce d'appui conforme à l'invention.

La **figure 6** est une vue en coupe longitudinale d'un deuxième exemple de réalisation d'un capteur conforme à l'invention.

La **figure 7** est une vue en éclatée du capteur illustré à la **fig. 6.**

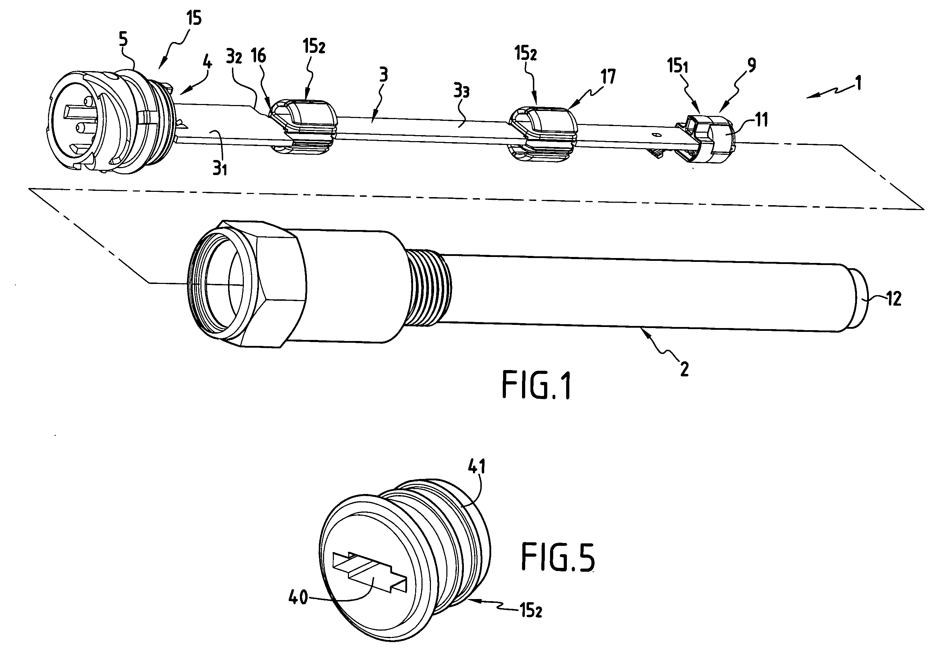

Tel que cela ressort plus précisément de la **figure 1**, l'objet de l'invention concerne un capteur **1** de vitesse comportant dans un godet de protection **2**, une plaquette **3** de circuit imprimé de forme allongée à caractère rigide ou semi-rigide présentant une première extrémité **4** munie, dans l'exemple illustré, d'un embout **5** d'assemblage avec le godet de protection **2**.

La plaquette de circuit imprimé **3** présente une deuxième extrémité **9** supportant au moins une cellule sensible **11** qui en position de montage de la plaquette **3** à l'intérieur du godet de protection **2,** s'étend à proximité du fond **12** du godet **2**. Une telle cellule sensible **11** par exemple du type à effet hall est sensible à une cible mobile se déplaçant dans un plan s'établissant à proximité du fond **12** du godet de protection **2**. De manière classique, la cellule sensible **11** est reliée électriquement par l'intermédiaire de pistes conductrices réalisées sur la plaquette **3**, à des composants électroniques fixés sur la plaquette **3**. Selon une variante préférée de réalisation illustrée sur les dessins, les composants électroniques sont fixés sur une partie élargie **3**_{**1**} de la plaquette **3** s'étendant à partir de l'embout d'assemblage **5.** La partie élargie **3**_{**1**} se prolonge au niveau d'une zone de jonction **3**_{**2**} par une partie étroite **3**_{**3**} s'étendant jusqu'à la deuxième extrémité **9.**

Conformément à l'invention, la plaquette de circuit imprimé **3** est maintenue en position fixe à l'intérieur du godet **2** à l'aide de moyens assurant son appui contre le godet à au moins ses première **4** et deuxième **9** extrémités afin de limiter les amplitudes de vibration de la plaquette **3**. Les moyens d'appui assurent ainsi une immobilisation de la plaquette de circuit imprimé **3**, à au moins ses deux extrémités **4, 9.**

Les moyens d'appui comportent ainsi des moyens **15** assurant l'immobilisation de la première extrémité **4** de la plaquette de circuit imprimé **3**. Par exemple, la première extrémité **4** est immobilisée par des moyens d'appui **15** constitués par une résine emprisonnant la première extrémité **4** qui est engagée dans des pattes de montage portées par l'embout **5** qui est assemblé au godet **2**.

Les moyens d'appui comportent aussi des moyens **15**_{**1**} assurant une immobilisation de la deuxième extrémité **9** de la plaquette de circuit imprimé **3.**

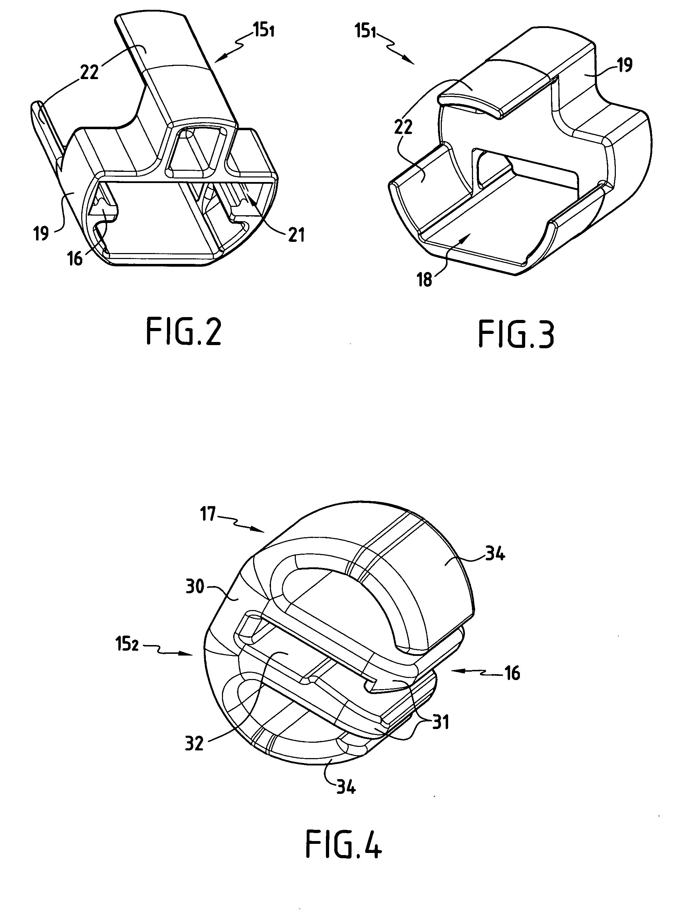

Selon un premier exemple de réalisation illustré plus précisément aux **fig. 2** et **3,** les moyens d'appui **15**_{**1**} sont constitués par une pièce d'appui dite d'extrémité adaptée pour immobiliser la deuxième extrémité **9** de la plaquette de circuit imprimé **3** à l'intérieur du godet **2.** Cette pièce d'appui d'extrémité **15**_{**1**} est pourvue de moyens de montage **16** sur la plaquette **3** et de préférence, de moyens élastiques d'appui **17** sur le godet **2.** Cette pièce d'appui d'extrémité **15**_{**1**} est pourvue d'un logement **18** pour au moins une cellule sensible **11.** Cette pièce d'appui d'extrémité **15**_{**1**} comporte ainsi un corps **19** délimitant d'un côté, en tant que moyens de montage, une cavité **21** de réception de l'extrémité libre de la plaquette **3** et de l'autre côté le logement **18** de réception de la cellule sensible **11** autour duquel s'étendent axialement en tant que moyens élastiques, au moins un et dans l'exemple illustré plusieurs doigts élastiques **22** répartis à la circonférence du corps **19**. Il doit être compris que les doigts élastiques **22** viennent en contact directement ou par l'intermédiaire d'une douille, avec la face interne du godet de manière à assurer un appui à l'ensemble constitué par la plaquette **3**.

Selon une variante de réalisation, le capteur **1** comporte au moins une et dans l'exemple illustré, deux pièces d'appui **15**_{**2**} dites intermédiaires montées localement entre les extrémités **4, 9** de la plaquette de circuit imprimé **3**, afin de limiter les vibrations de la plaquette **3.**

Il doit être compris que chaque pièce d'appui intermédiaire, **15**_{**2**} est positionnée en un endroit donné le long de la plaquette **3** de manière à augmenter la fréquence des modes propres de flexion, ce qui à pour effet de diminuer les amplitudes de vibrations de la plaquette **3.** Il doit être compris qu'une pièce d'appui intermédiaire **15**_{**2**} est positionnée au niveau de chaque ventre de la déformée modale choisie. En d'autres termes, pour un type de plaquette **3,** il est calculé la déformée modale qui pour chacun des modes propres de 1 à n, présente un ou plusieurs ventres. Ainsi, en fonction du niveau de performance à atteindre, il est choisi de placer les pièces d'appui intermédiaires **15**_{**2**} sur les ventres de la déformée du rang modal choisi.

Selon un exemple de réalisation, une pièce d'appui **15**_{**2**} est montée sur la partie étroite **3**_{**3**} de la plaquette, à une distance de la zone de jonction **3**_{**2**} de l'ordre sensiblement de 9 mm ; 18,5 mm ; 33,5 mm ; 9 et 83 mm pour une longueur totale de la plaquette égale respectivement à 101 mm ; 128 mm ; 145 mm et 175 mm.

La plaquette **3** est maintenue en position à l'intérieur du godet **2** par une ou plusieurs pièces d'appui intermédiaires **15**_{**2**} disposées localement le long de la plaquette **3** en fonction de la longueur de la plaquette **3.**

Chaque pièce d'appui intermédiaire **15**_{**2**} est également pourvue de moyens de montage **16** sur la plaquette **3** et de moyens élastiques d'appui **17** sur le godet **2** de manière à permettre le maintien en position de la plaquette **3** à l'intérieur du godet **2.** Chaque pièce d'appui intermédiaire **15**_{**2**} se trouve correctement en contact avec la surface interne du godet **2** en raison de la présence des moyens élastiques d'appui **17**.

Selon un deuxième type de réalisation illustré plus particulièrement à la **fig. 4,** le capteur de vitesse comporte au moins une pièce d'appui **15**_{**2**} dite intermédiaire réalisée par l'intermédiaire d'un manchon ouvert **30** comportant d'une part deux pattes axiales **31** délimitant entre elles un alésage de passage **32** pour la plaquette **3** constituant ainsi les moyens de montage **16** sur la plaquette **3.** Ainsi, la pièce d'appui **15**_{**2**} est montée par pincement ou par encliquetage à l'aide des pattes élastiques **31,** sur la plaquette **3.** Par ailleurs, un tel manchon ouvert **30** comporte au moins deux ailes élastiques **34** diamétralement opposées en appui contre le godet et constituant les moyens élastiques d'appui **17**.

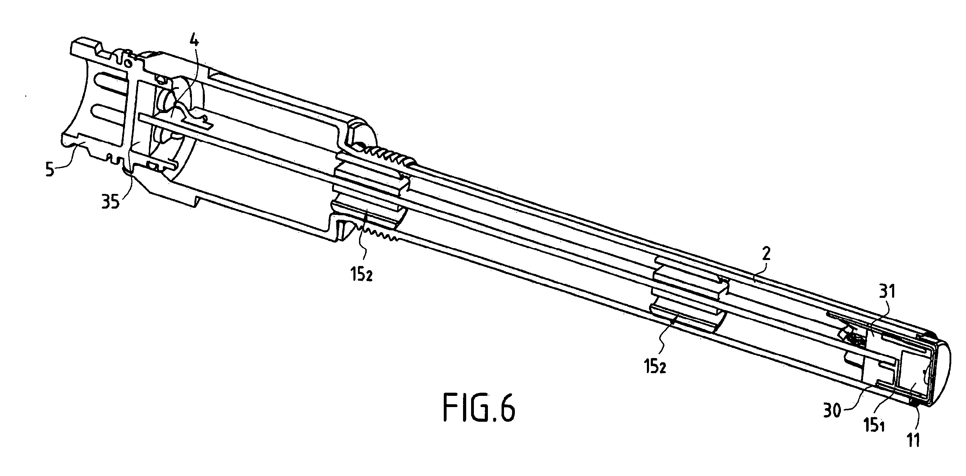

La **fig. 5** illustre une autre variante de réalisation d'une pièce d'appui intermédiaire **15**_{**2**} destinée à être emmanchée sur la plaquette **3.** Cette pièce d'appui intermédiaire **15**_{**2**} se présente sous la forme d'une bague en matière plastique élastique pourvue d'un alésage axial **40** de section droite transversale complémentaire à celle de la plaquette **3.** Cette bague **15**_{**2**} comporte à sa surface périphérique, des nervures d'appui annulaires **41** destinées à venir en contact avec la face interne du godet de protection **2.**

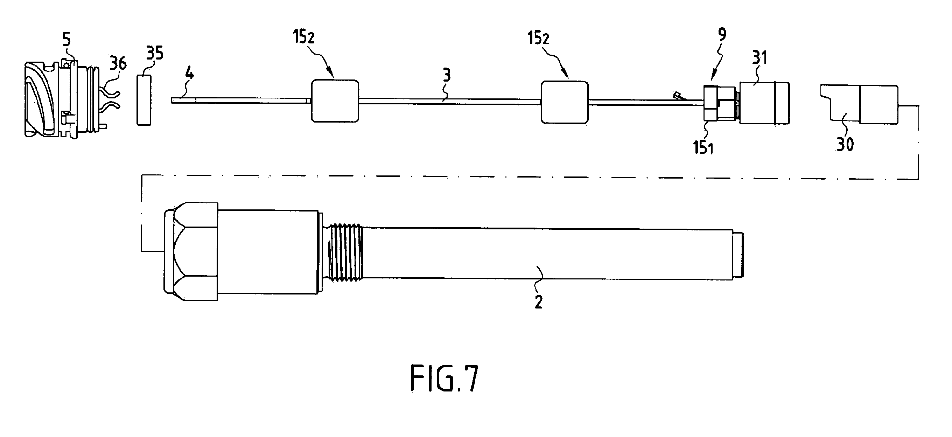

Les **figure 6** et **7** illustrent un deuxième exemple de réalisation d'un capteur de vitesse 1 conforme à l'invention. Selon cet exemple de réalisation, les moyens d'appui pour la deuxième extrémité **9** de la plaquette de circuit imprimé **3** comporte une pièce d'appui **15**_{**1**} telle que celle décrite à la **fig. 1.** La pièce d'appui est en appui sur le godet **2** à l'aide d'un godet intermédiaire **30** interposé entre le godet **2** et la pièce d'appui **15**_{**1**}. La pièce d'appui **15**_{**1**} incluant la cellule **11** et le godet intermédiaire sont noyés par de la résine **31** permettant l'immobilisation de l'ensemble dans le fond du godet **2**. La résine **31** forme ainsi un bloc de résine localisé permettant d'immobiliser la deuxième extrémité **9** de la plaquette de circuit imprimé. Il est à noter que la première extrémité **4** est également immobilisée par l'intermédiaire d'une rondelle de résine **35** noyant cette première extrémité **4** engagée entre deux doigts élastiques **36** portés par l'embout **5** monté dans le godet **2**.

L'invention n'est pas limitée aux exemples décrits et représentés car diverses modifications peuvent y être apportées sans sortir de son cadre.

## Revendications

1. Capteur de vitesse comportant dans un godet de protection (**2**), une plaquette (**3**) de circuit imprimé allongée présentant une première extrémité (**4**) et une deuxième extrémité (**9**) supportant au moins une cellule (**11**) s'étendant à proximité du fond du godet **caractérisé en ce que** la plaquette de circuit imprimé (**3**) est maintenue en position à l'intérieur du godet (**2**) à l'aide de moyens assurant son appui contre le godet à au moins ses première (**4**) et deuxième (**9**) extrémités afin de limiter les amplitudes de vibration de la plaquette.

2. Capteur de vitesse selon la revendication 1, **caractérisé en ce qu'**il comporte au moins une pièce d'appui dite intermédiaire (**15**_{**2**}) montée entre les extrémités (**4, 9**) de la plaquette.

3. Capteur de vitesse selon la revendication 1, **caractérisé en ce que** les moyens d'appui de la deuxième extrémité sont constitués par au moins une pièce d'appui d'extrémité (**15**_{**1**}) délimitant au moins un logement (**18**) pour une cellule (**11**).

4. Capteur de vitesse selon la revendication 3, **caractérisé en ce que** la pièce d'appui (**15**_{**1**}) d'extrémité est en appui sur le godet (**2**) à l'aide d'un godet intermédiaire (**30**).

5. Capteur de vitesse selon la revendication 3 ou 4, **caractérisé en ce que** la pièce d'appui (**15**_{**1**}) d'extrémité est noyée dans une résine l'immobilisant dans le godet.

6. Capteur de vitesse selon l'une des revendications 2 à 5, **caractérisé en ce que** chaque pièce d'appui (**15**_{**1**}**, 15**_{**2**}) est pourvue de moyens élastiques d'appui (**17**) sur le godet (**2**).

7. Capteur de vitesse selon l'une des revendications 2 à 6, **caractérisé en ce que** chaque pièce d'appui (**15**_{**1**}, **15**_{**2**}) est pourvue de moyens de montage (**16**) sur la plaquette (**3**).

8. Capteur de vitesse selon la revendication 2, **caractérisé en ce que** chaque pièce d'appui intermédiaire (**15**_{**2**}) est réalisée par l'intermédiaire d'un manchon ouvert (**30**) comportant d'une part deux pattes axiales (**31**) délimitant entre elles un alésage de passage (**32**) pour la plaquette, et d'autre part, deux ailes élastiques (**34**) diamétralement opposées en appui sur le godet.

9. Capteur de vitesse selon l'une des revendications 3 à 5, **caractérisé en ce que** la pièce d'appui d'extrémité (**15**_{**1**}) comporte un corps (**19**) délimitant d'un côté, une cavité (**21**) de réception de l'extrémité libre de la plaquette (**3**) et de l'autre côté, le logement de réception (**18**) d'au moins une cellule sensible (**11**) autour duquel s'étendent axialement des doigts élastiques (**22**) répartis à la circonférence du corps.

10. Capteur de vitesse selon la revendication 1, **caractérisé en ce que** la plaquette de circuit imprimé (**3**) présente une partie élargie (**3**_{**1**}) s'étendant à partir de l'embout d'assemblage et se prolongeant par une partie étroite (**3**_{**3**}) jusqu'à la deuxième extrémité (**9**).

11. Capteur de vitesse selon la revendication 10, **caractérisé en ce qu'**une pièce d'appui (**15**_{**2**}) est montée sur la partie étroite (**3**_{**3**}) de la plaquette à une distance de la zone de jonction (**3**_{**2**}) avec la partie élargie (**3**_{**1**}), de l'ordre sensiblement de 9 mm ; 18,5 mm ; 33,5 mm ; 9 mm et 83 mm pour une longueur totale de la plaquette (**3**) respectivement égale à 101 mm ; 128 mm ; 145 mm et 175 mm.
